# FASCICULE DE BREVET EUROPEEN

(11) **EP 1 181 477 B1**
(45) Date de publication et mention de la délivrance du brevet: **22.12.2004**
(21) Numéro de dépôt: 00938881.0
(22) Date de dépôt: 02.06.2000
(51) Int. Cl.: F16L 21/06

(54) **DISPOSITIF POUR LE RACCORDEMENT ETANCHE DE DEUX TUBES LISSES**
VORRICHTUNG ZUM DICHTEN VERBINDEN VON ZWEI GLATTEN ROHREN
DEVICE FOR SEALED CONNECTION BETWEEN TWO SMOOTH TUBES

(30) Priorité: 02.06.1999 FR 9906935
(43) Date de publication de la demande: 27.02.2002
(73) Titulaire: Etablissements CAILLAU, 92130 Issy-les-Moulineaux (FR)
(72) Inventeur: DETABLE, Pascal, 41130 Gievres (FR); ANDRE, Michel, 41200 Romorantin-Lanthenay (FR)
(74) Mandataire: Intès, Didier Gérard André
(86) Numéro de dépôt international: PCT/FR2000/001526
(87) Numéro de publication internationale: WO 2000/075548

(56) Documents cités:
- FR-A- 2 662 486
- FR-A- 2 748 542
- US-A- 1 978 195

## Description

La présente invention concerne un dispositif pour l'accouplement étanche de deux tubes lisses disposés bout à bout ayant sensiblement le même diamètre.

On connaît déjà, par le brevet français n° 2 662 486, un dispositif de ce type, qui comprend un manchon susceptible d'être disposé autour des extrémités en regard des deux tubes, ce manchon étant pourvu de moyens pour permettre une diminution de son diamètre sous l'action de moyens de serrage. Ce dispositif comprend, en outre, une bague d'étanchéité apte à être disposée dans le manchon pour entourer les extrémités en regard des deux tubes, cette bague étant constituée par une bande plate enroulée sur elle-même et présentant une première et une deuxième extrémité longitudinales aptes à venir en contact l'une avec l'autre lorsque, la bague étant située dans le manchon, ce dernier est serré autour des extrémités en regard des tubes.

Par exemple, le manchon présente deux extrémités libres pourvues de lèvres d'assemblage qui délimitent entre elles une fente axiale. Les lèvres d'assemblage sont aptes à coopérer avec des moyens de serrage du manchon susceptibles de rapprocher les lèvres l'une de l'autre pour diminuer le diamètre du manchon.

Les dispositifs de ce type servent en particulier au raccord bout à bout de deux tubes d'échappement. Les exigences en matière d'étanchéité du raccord sont de plus en plus grandes. On a naturellement tendance à penser que plus on serre le manchon sur les tubes, plus l'étanchéité est améliorée. Il est d'ailleurs vrai que l'une des conditions requises pour obtenir l'étanchéité est que la périphérie interne de la bague soit en contact étanche avec la périphérie externe des tubes. Toutefois, plus on serre le manchon, plus on diminue le diamètre de la bague d'étanchéité. Ainsi, pour obtenir l'étanchéité dans la région de la jonction entre les extrémités longitudinales de la bague, il faut que ces extrémités soient en contact étanche à partir d'un degré de serrage donné et, de plus, que le fait de serrer davantage le manchon à partir du moment où ce contact est établi ne nuise pas à l'étanchéité, par exemple en occasionnant un chevauchement des deux extrémités longitudinales.

Dans cette optique, le brevet français n° 2 662 486 propose une bague dont les extrémités longitudinales sont réalisées en biseau, de telle sorte qu'elles peuvent être appliquées l'une contre l'autre et se décaler transversalement l'une par rapport à l'autre lorsque le diamètre de la bague diminue. Cette solution est globalement satisfaisante puisqu'elle permet d'éviter le chevauchement lors du serrage, même si celui-ci est excessif. Toutefois, elle ne permet pas de maîtriser totalement l'appui des deux extrémités libres l'une contre l'autre, de sorte qu'il peut arriver que cet appui ne soit pas suffisant pour que le contact soit étanche. De plus, en permettant un décalage transversal des extrémités de la bague l'une par rapport à l'autre, elle ne permet pas d'assurer le calage de cette bague à l'intérieur du manchon.

La demande de brevet français n° 2 748 542 apporte une autre solution consistant à doter la bague d'étanchéité d'une capacité à se déformer dans le sens d'une diminution de sa longueur, lorsque les bords libres de cette bague sont sollicités en appui l'un contre l'autre. Cette demande de brevet préconise à cet effet de pratiquer des perforations au voisinage de l'un des bords de la bague.

Ce dispositif est satisfaisant et donne d'excellents résultats en particulier lorsque la bague d'étanchéité est réalisée en un matériau tendre tel que de l'aluminium. Pour d'autres matériaux, en particulier de l'acier revêtu d'aluminium, le caractère déformable des bords libres de la bague est plus délicat à contrôler et les coûts de fabrication s'en ressentent.

Le brevet US 1 978 195 montre quant à lui un dispositif dans lequel une extrémité de la bague présente une encoche en U dans laquelle s'insère l'autre extrémité, en forme de languette de largeur constante. Ces dispositions évitent également que les extrémités de la bague ne se chevauchent, mais elles ne permettent pas non plus un appui étanche entre elles.

La présente invention vise à proposer un dispositif amélioré qui, tout en s'adaptant aux contraintes évoquées ci-dessus, permette effectivement de maîtriser totalement l'appui des deux extrémités libres de la bague l'une contre l'autre et assure ainsi un contact étanche entre ces deux extrémités même si le serrage excède un degré de serrage "normal" ; elle vise également à proposer un dispositif dont la bague puisse être fabriquée de manière simple et peu coûteuse, même dans des matériaux autres que l'aluminium, par exemple un acier relativement tendre, éventuellement revêtu d'aluminium.

L'invention s'applique à un dispositif qui comprend un manchon susceptible d'être disposé autour des extrémités en regard des deux tubes, ce manchon étant pourvu de moyens pour permettre une diminution de son diamètre sous l'action de moyens de serrage, le dispositif comprenant en outre, une bague d'étanchéité apte à être disposée dans le manchon pour entourer les extrémités en regard des deux tubes, cette bague étant constituée par une bande plate enroulée sur elle-même et présentant une première et une deuxième extrémité longitudinales aptes à venir en contact l'une avec l'autre lorsque, la bague étant située dans le manchon, ce dernier est serré autour des extrémités en regard des tubes ; la première extrémité présentant une encoche, tandis que la deuxième extrémité présente la forme d'une languette susceptible d'être introduite dans cette encoche.

Le but précité est atteint grâce au fait que la largeur de la languette, mesurée d'un côté à l'autre de cette dernière transversalement à la bande, de même que la largeur de l'encoche, mesurée d'un côté à l'autre de cette dernière transversalement à la bande, vont en diminuant dans le sens allant, en parcourant la bande, de la première extrémité longitudinale vers la deuxième extrémité longitudinale, au fait que, pour une position d'insertion partielle de la languette dans l'encoche, les deux côtés de la languette sont susceptibles de venir en contact avec les deux côtés de l'encoche alors que le bout libre de la languette reste à distance du fond de l'encoche et au fait que, à partir de ladite position d'insertion partielle, la languette est susceptible de pénétrer plus avant dans l'encoche sous l'effet du serrage.

Grâce à ces dispositions, les côtés de la languette peuvent venir en contact étanche avec les côtés de l'encoche dès l'obtention de la position d'insertion partielle et ce contact subsiste lorsque le serrage augmente puisque la languette peut pénétrer plus avant dans l'encoche. Ainsi, les fuites sont confinées dans l'ouverture ménagée entre le fond de l'encoche et le bout libre de la languette. Pour rendre le dispositif étanche, il suffit de prendre la précaution lors du montage de placer cette ouverture sous une région pleine du manchon, qui emprisonne les fuites. Pour ce faire, le dispositif comporte avantageusement des moyens pour définir la position de la bague d'étanchéité dans le manchon, de telle sorte que les extrémités longitudinales de cette bague soient angulairement décalées par rapport à une ouverture de serrage que présente le manchon.

De manière avantageuse, l'encoche est délimitée latéralement par deux pattes susceptibles de se déformer en s'écartant l'une de l'autre lorsque la languette s'avance dans l'encoche à partir de sa position d'insertion partielle. En fait, l'encoche peut être réalisée par une simple découpe, de part et d'autre de laquelle on laisse subsister les deux pattes. Dans ce mode de réalisation particulièrement simple qui donne toute satisfaction, il suffit de conférer aux deux pattes une largeur telle qu'elles puissent se déformer plastiquement en s'écartant l'une de l'autre lorsque le serrage augmente.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue de côté du dispositif, sans les tubes susceptibles d'être disposés à l'intérieur,
- la figure 2 est une vue extérieure axiale du manchon suivant la flèche II de la figure 1,
- la figure 3 est une vue de dessus de la bande qui constitue la bague, cette bande étant représentée à plat,
- la figure 4 est une coupe de la bande de la figure 3, selon la ligne IV-IV,
- les figures 5A et 5B sont deux vues partielles montrant, en vue de dessus, la bande enroulée sur elle-même, respectivement avant l'insertion de la languette dans l'encoche et à l'état serré de la bague,
- la figure 6 est une vue partielle en coupe dans le plan transversal médian du dispositif, montrant le détail VI de la figure 1, et
- la figure 7 montre une variante en coupe transversale selon la ligne VII-VII de la figure 3.

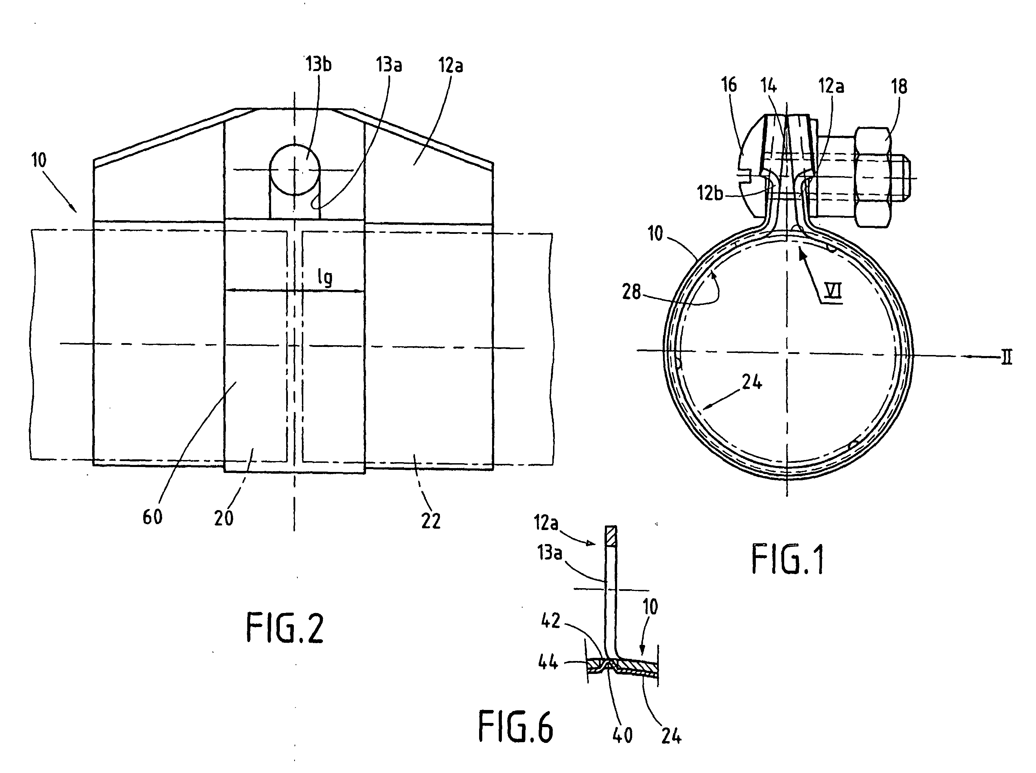

En se reportant tout d'abord aux figures 1 et 2, on voit que le dispositif comporte un manchon 10 dont deux extrémités libres, qui s'étendent sensiblement axialement, sont pourvues de lèvres d'assemblage 12a et 12b. Ces lèvres délimitent entre elles une fente axiale 14 qui, comme le montre la figure 1, tend à se refermer lorsque l'on serre le manchon. Les lèvres 12a et 12b coopèrent en effet avec des moyens de serrage du manchon qui les rapprochent l'une de l'autre. Dans l'exemple représenté, ces moyens de serrage comportent un boulon comprenant une vis 16 dont la tige passe à travers deux orifices 13a et 13b respectivement ménagés dans les lèvres 12a et 12b, et un écrou 18 vissé sur cette tige.

Des plaquettes intermédiaires (non représentées), servant notamment à atténuer l'effet des vibrations sur le serrage, peuvent être disposées, d'une part entre la tête de la vis 16 et la lèvre 12b, d'autre part entre l'écrou 18 et la lèvre 12a. La tête de la vis peut être polygonale et être bloquée en rotation par un aménagement de la plaquette avec laquelle elle coopère.

Le dispositif, qui sert à raccorder deux tubes ayant sensiblement le même diamètre, peut être disposé autour des extrémités en regard de ces deux tubes, extrémités représentées en traits mixtes interrompus sur la figure 2 et respectivement désignées par les références 20 et 22.

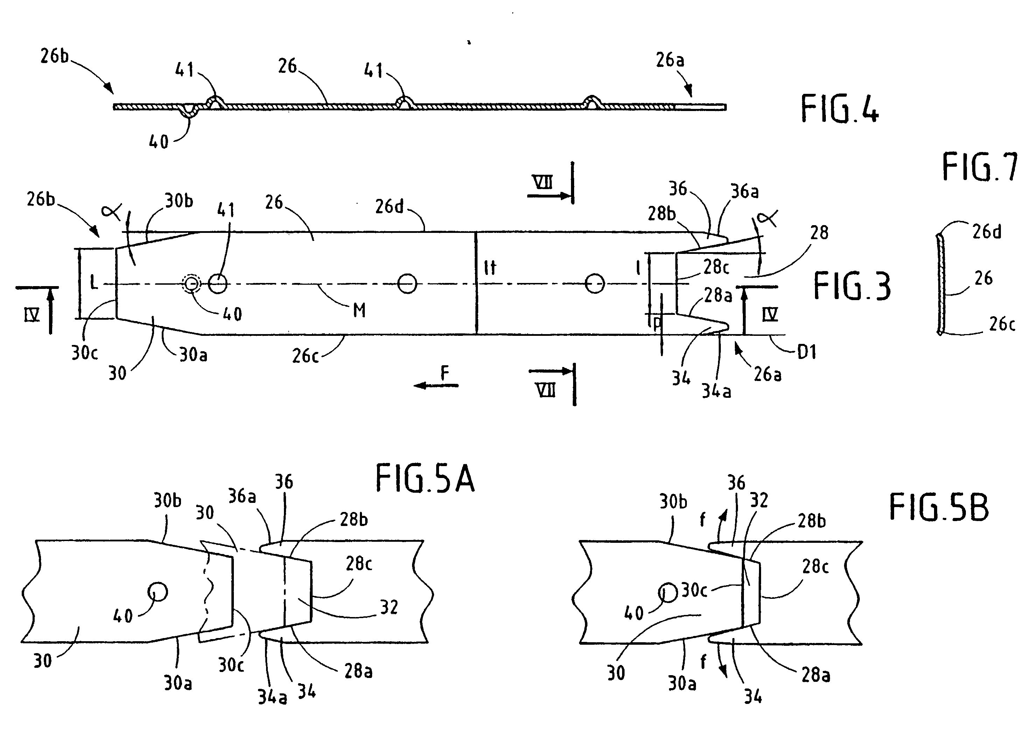

Le dispositif comprend, en outre, une bague d'étanchéité 24 qui, comme le montre la figure 1, est disposée dans le manchon 10 pour entourer les extrémités en regard des deux tubes 20 et 22. La bague 24 est constituée par une bande plate 26, représentée sur les figures 3 à 5, qui est enroulée sur elle-même. Les deux extrémités longitudinales 26a et 26b de la bande 26 sont aptes à venir en contact l'une avec l'autre lorsque, la bague étant disposée à l'intérieur du manchon, ce dernier est serré autour des extrémités des tubes.

La première extrémité longitudinale 26a de la bague présente une encoche 28, tandis que la deuxième extrémité longitudinale 26b présente la forme d'une languette 30 qui, comme le montre la figure 5B, peut être introduite dans l'encoche 28. Comme on le voit sur la figure 3, la largeur de l'encoche, mesurée d'un côté 28a à l'autre 28b de cette encoche, transversalement à la bande, diminue dans le sens F allant, en parcourant la bande, de la première extrémité 26a à la deuxième extrémité 26b. C'est également le cas de la languette 30, dont la largeur diminue d'un côté 30a à l'autre 30b dans le même sens F. On voit ainsi que la largeur de l'encoche diminue jusqu'à une largeur I du fond 28c de l'encoche, et que la largeur de la languette diminue jusqu'à une largeur L du bout libre 30c de cette languette.

Il existe une position d'insertion partielle de la languette 30 de l'encoche 28 (en traits mixtes interrompus sur la figure 5A) pour laquelle les deux côtés 30a et 30b de la languette sont en contact avec les deux côtés 28a et 28b de l'encoche, tandis que le bout libre 30c de la languette reste à distance du fond 28c de l'encoche, de telle sorte qu'une ouverture 32 est ménagée entre ce bout libre et ce fond.

En fait, dans l'exemple représenté, la largeur L du bout libre 30c de la languette est légèrement supérieure à la largeur I du fond 28c de l'encoche, de sorte que la position d'insertion partielle est obtenue lorsque le bout libre de la languette parvient dans une région de l'encoche dans laquelle l'espacement entre les côtés 28a et 28b est égale à la largeur L.

De préférence, on fera en sorte que cette position d'insertion partielle corresponde à un diamètre de la bague 24 sensiblement égal au diamètre égal extérieur des tubes, éventuellement très légèrement supérieur à ce dernier. A partir de cette situation, il est nécessaire de pouvoir serrer encore davantage la bague pour permettre un contact étanche entre la face interne de la bague et les périphéries externes des tubes. L'invention permet de faire en sorte que ce serrage ne nuise pas au contact étanche entre les côtés de la languette et ceux de l'encoche puisque, lors du serrage, la languette 30 peut avancer davantage dans l'encoche, c'est-à-dire que le bout libre 30c peut se rapprocher du fond 28c en diminuant la longueur de l'ouverture 32. Cette capacité peut être liée au choix du matériau dans lequel on réalise la bague ou, de préférence, à la géométrie de cette derniere.

Ainsi, on peut choisir de réaliser la bague dans un acier susceptible de se déformer légèrement plastiquement, en particulier un acier relativement tendre, éventuellement revêtu d'aluminium. Elle peut également être fabriquée dans un matériau tel que de l'aluminium.

La bague 24 étant emprisonnée sous le manchon lors du serrage de ce dernier, un serrage augmente ne peut que conduire à une légère déformation des bords de l'encoche et/ou de ceux de la languette pour permettre l'avancement de la languette dans l'encoche. Quoiqu'il en soit, le contact étanche sera toujours préservé, par exemple entre la région des côtés 30a et 30b de la languette 30 la plus proche du bout libre 30c de cette dernière et les régions des côtés 28a et 28b correspondantes. Bien entendu, pour obtenir un contact étanche, il n'est pas nécessaire que les côtés 30a et 28a d'une part et les côtés 30b et 28b d'autre part soient en contact intime sur toute leur longueur de recouvrement. Il suffit d'être certain que sur une partie de cette longueur de recouvrement, le contact soit effectivement assuré.

Comme on le voit sur les figures, l'encoche 28 est délimitée latéralement par deux pattes 34 et 36 qui sont globalement situées, de part et d'autre de l'encoche, dans le prolongement des bords longitudinaux 26c et 26d de la bande. Comme on l'a indiqué par des flèches f sur la figure 5B, ces pattes sont susceptibles de se déformer en s'écartant l'une de l'autre lorsque la languette 30 avance dans l'encoche à partir de la position d'insertion partielle.

Le matériau de la bande peut être de l'acier courant, et la largeur des pattes, telle que leur écartement est rendu possible. Par exemple, la largeur l du fond de l'encoche est sensiblement égale à 60% de la largeur totale It de la bande dans sa région courante, tandis que les largeurs Ip des pattes 34 et 36 dans la région de leur rattachement à la partie courante de la bande est seulement sensiblement égale, pour chaque patte, à 20 % de la largeur It. Compte tenu du fait que lors du serrage la bande est emprisonnée sous le manchon et que la languette 30 présente une largeur, au moins égale à L, très nettement supérieure aux largeurs Ip, ce sont bien les pattes 34 et 36 qui se déforment sous l'effet des contraintes exercées lors du serrage et permettent ainsi l'avancement de la languette dans l'encoche.

De manière avantageuse, les côtés extérieurs des pattes 34 et 36 s'étendent au moins partiellement en retrait par rapport aux bords longitudinaux 26c et 26d de la bande 26. Plus précisément, on remarque sur la figure 3 que le côté extérieur de la patte 34 présente une portion 34a qui, par rapport à une droite D1 prolongeant le bord longitudinal 26c de la bande, est rentrée vers l'axe longitudinal médian M de la bande 26. Le côté extérieur de la patte 36 présente une région 36a de conformation analogue à la région 34a. Cette disposition, ainsi que la configuration des côtés 28a et 28b de l'encoche, font que les pattes 34 et 36 vont en s'élargissant dans le sens F.

Ceci permet de faire en sorte que, lors de l'écartement des pattes lié à l'avancement de la languette dans l'encoche, la largeur d'un bord à l'autre de la bande dans la région des pattes 34 et 36 reste tout au plus sensiblement égale à la largeur It qu'elle présente dans sa partie courante (voir figure 5B). Cette disposition est intéressante puisque, comme on le voit sur la figure 2, le manchon 10 présente avantageusement une zone en creux 60 réalisée par un embouti sensiblement annulaire, en saillie vers l'extérieur, qui sert de logement de calage pour la bague 24. La dimension axiale Ig de ce logement 60 est sensiblement égale à la largeur It de la bague pour permettre un calage correct. Du fait de la conformation particulière des régions 34a et 36a des pattes, la bague reste correctement calée dans le logement, sans aucun chevauchement, même lorsque les pattes sont écartées l'une de l'autre.

Sur les figures, le côté 30a de la languette est parallèle au côté 28a de l'encoche et le côté 30b de la languette est parallèle au côté 28b de l'encoche. Par exemple, ces côtés sont disposés en oblique par rapport à l'axe longitudinal médian M de la bande et forment, par rapport à la direction longitudinale, un angle α de l'ordre d'une dizaine de degrés. Pour que l'écartement des deux pattes 34 et 36 soit sensiblement le même, la bande est avantageusement symétrique par rapport à son axe longitudinal médian M.

Ainsi, pour permettre la position d'insertion partielle, on peut par exemple, comme sur les figures, choisir la largeur L supérieure à la largeur I et réaliser parallèles deux à deux les côtés de l'encoche 28 et ceux de la languette.

Entre autres possibilités, on pourrait en variante, choisir les largeurs L et I sensiblement égales et faire en sorte que les côtés de la languette, au moins au voisinage du bout libre de cette dernière, soient plus fortement inclinés par rapport à la direction longitudinale de la bande que les côtés de l'encoche.

La bague d'étanchéité délimite un espace fermé dans la zone de raccordement des extrémités des tubes 20 et 22, entre les périphéries externes des tubes et la périphérie interne de la bague. La seule ouverture de cet espace est l'ouverture 32 ménagée entre le bout libre 30c de la languette et le fond 28c de l'encoche. Ainsi, les fuites susceptibles de se produire se rassemblent toutes dans cette ouverture 32. Pour emprisonner ces fuites, il suffit de placer la bague à l'intérieur du manchon de telle sorte que cette ouverture 32 se trouve en regard d'une partie pleine de ce manchon. Par conséquent, il convient de décaler les extrémités longitudinales de la bague par rapport à la fente 14 du manchon précédemment évoqué. Pour permettre de positionnement correct de façon certaine sans avoir recours à la vigilance de l'opérateur, le dispositif est équipé de moyens de positionnement. Ces moyens comportent par exemple un embouti 40, réalisé dans la bague 24 et faisant radialement saillie vers l'extérieur de cette dernière lorsqu'elle est enroulée sur elle-même. Comme on le voit mieux sur la figure 6, la périphérie du manchon 10 comporte quant à elle un renfoncement ou une perforation 42 dans lequel vient se loger l'embouti 40. De préférence, ce renfoncement ou cette perforation est pratiqué dans une bavette 44 qui s'étend selon la périphérie de l'embout 10 et qui a été préservée lors de la réalisation par repli des lèvres d'assemblage 12a et 12b et de la découpe de l'une des ouvertures 13a et 13b de ces dernières.

Des emboutis 41 réalisés sur l'autre face de la bande 26 sont destinés à caler l'une par rapport à l'autre les extrémités 20 et 22 des tubes.

Bien entendu, les fuites sont évitées lorsqu'un contact étanche est établi entre la périphérie interne du manchon et les bords de l'ouverture 32 constitués notamment par le bout libre 30c de la languette et le fond 28c de l'encoche. Ce contact étanche est normalement établi du simple fait que les surfaces en contact sont lisses et en appui les unes contre les autres.

En variante, on peut doter les bords de l'ouverture 32 d'une bordure relevée vers l'extérieur. Plus précisément, on peut, lors de la découpe des extrémités de la bague, relever légèrement vers l'extérieur les côtés 28a et 28b de l'encoche, de même que le fond 28c de cette dernière et que le bout libre 30c de la languette. On forme ainsi, quel que soit le degré d'avancement de la languette dans l'encoche, une bordure relevée s'étendant sur la totalité du pourtour et l'ouverture 32. On dote cette bordure d'une épaisseur faible, par exemple de 5 à 30 % de l'épaisseur de la bande 26, ce qui lui confère une relative souplesse permettant d'assurer sa déformation lors de l'appui du manchon sur la bague et, par conséquent, de réaliser le contact étanche entre les bords de l'ouverture et la périphérie interne du manchon.

De même, comme on le voit sur la figure 7, on peut choisir de doter la bande 26 de bordures retournées vers l'intérieur de la bague, s'étendant sur les bords longitudinaux 26c et 26d de cette dernière. Ainsi, lorsque la bague est serrée sur les périphéries externes des tubes, les bordures sont aptes à coopérer avec lesdites périphéries externes et, en les dotant d'une épaisseur relativement faible, on les rend déformables de manière à assurer le contact étanche. Ces bordures s'étendent avantageusement sur l'intégralité des bords longitudinaux 26c et 26b de la bague, y compris les côtés externes des pattes 34 et 36, voire au moins une partie des côtés 30a et 30b de la languette. Elles constituent ainsi les joncs d'étanchéité disposés sur tout le pourtour de la bague étanchéité 24, et compatibles avec la présence de la bordure relevée de l'ouverture 32 évoquée précédemment.

## Revendications

1. Dispositif pour l'accouplement étanche de deux tubes lisses (20, 22) disposés bout à bout ayant sensiblement le même diamètre, le dispositif comprenant un manchon (10) susceptible d'être disposé autour des extrémités en regard des deux tubes, ce manchon étant pourvu de moyens (14) pour permettre une diminution de son diamètre sous l'action de moyens de serrage (16, 18), le dispositif comprenant, en outre, une bague d'étanchéité (24) apte à être disposée dans le manchon (10) pour entourer les extrémités en regard des deux tubes, cette bague étant constituée par une bande plate (26) enroulée sur elle-même et présentant une première et une deuxième extrémité longitudinale (16a, 26b) aptes à venir en contact l'une avec l'autre lorsque, la bague (24) étant située dans le manchon (10), ce dernier est serré autour des extrémités en regard des tubes (20, 22), la première extrémité longitudinale (26a) de la bague d'étanchéité présentant une encoche (28), cependant que la deuxième extrémité longitudinale (26a) de ladite bague présente la forme d'une languette (30) susceptible d'être introduite dans cette encoche,
**caractérisé en ce que** la largeur de la languette (30), mesurée d'un côté à l'autre de cette dernière transversalement à la bande, de même que la largeur de l'encoche (28), mesurée d'un côté (28a) à l'autre (28b) de cette dernière transversalement à la bande, vont en diminuant dans le sens (F) allant, en parcourant la bande, de la première extrémité longitudinale (26a) vers la deuxième extrémité longitudinale (26b), **en ce que**, pour une position d'insertion partielle de la languette (30) dans l'encoche (28), les deux côtés (30a, 30b) de la languette sont susceptibles de venir en contact avec les deux côtés (28a, 28b) de l'encoche alors que le bout libre (30a) de la languette reste à distance du fond (28c) de l'encoche et **en ce que**, à partir de ladite position d'insertion partielle, la languette est susceptible de pénétrer plus avant dans l'encoche sous l'effet du serrage.

2. Dispositif selon la revendication 1, **caractérisé en ce que** l'encoche (28) est délimitée latéralement par deux pattes (34, 36) susceptibles de se déformer en s'écartant l'une de l'autre lorsque la languette (30) s'avance dans l'encoche (28) à partir de la position d'insertion partielle.

3. Dispositif selon la revendication 2, **caractérisé en ce que** les côtés extérieurs (34a, 36a) des pattes (34, 36) s'étendent au moins partiellement en retrait par rapport aux bords longitudinaux (26c, 26d) de la bande (26).

4. Dispositif selon l'une quelconque des revendications 1 à 3, **caractérisé en ce que** la largeur (L) du bout (30c) libre de la languette (30) est supérieure à la largeur (l) du fond (28c) de l'encoche (28).

5. Dispositif selon l'une quelconque des revendications 1 à 4, **caractérisé en ce que** les côtés (28a, 28b) de l'encoche (28) et les côtés (30a, 30b) de la languette (30) respectivement destinés à venir en contact les uns avec les autres sont respectivement parallèles entre eux.

6. Dispositif selon l'une quelconque des revendications 1 à 5, **caractérisé en ce qu'**il comporte des moyens (40, 42) pour définir la position de la bague d'étanchéité (24) dans le manchon (10) de telle sorte que les extrémités longitudinales (26a, 26b) de cette bague (26) soient angulairement décalés par rapport à une ouverture de serrage (14) que présente le manchon (10).

7. Dispositif selon l'une quelconque des revendications 1 à 6, **caractérisé en ce que** la bague d'étanchéité (24) présente des joncs d'étanchéité disposés sur son pourtour.

## Claims

1. A device for coupling together in leaktight manner two smooth tubes (20, 22) disposed end-to-end and of substantially the same diameter, the device comprising a sleeve (10) suitable for being disposed around the facing ends of the two tubes, which sleeve is provided with means (14) for reducing its diameter under the action of tightening means (16, 18), the device further comprising a sealing ring (24) suitable for being disposed inside the sleeve (10) so as to surround the facing ends of the two tubes, said ring being constituted by a looped flat strip (26) having first and second longitudinal ends (16a, 26b) suitable for coming into contact with each other when, with the ring (24) being situated inside the sleeve (10), said sleeve is tightened around the facing ends of the tubes (20, 22), the first longitudinal end (26a) of the sealing ring being provided with a notch (28), while the second longitudinal end (26a) of said ring is in the form of a tongue (30) suitable for being inserted into said notch;
said device being **characterised in that** both the width of the tongue (30) as measured from one side of said tongue to the other side thereof transversely to the strip, and the width of the notch (28), as measured from one side (28a) of the notch to the other side (28b) thereof transversely to the strip taper in the direction (F) going along the strip from the first longitudinal end (26a) to the second longitudinal end (26b), **in that**, when the tongue (30) is in a partial insertion position in which it is inserted partially in the notch (28), the two sides (30a, 30b) of the tongue are suitable for coming into contact with the two sides (28a, 28b) of the notch while the free end (30a) of the tongue remains at a distance from the end wall (28c) of the notch, and **in that**, starting from said partial insertion position, the tongue is suitable for penetrating further into the notch under the effect of the tightening.

2. A device according to claim 1, **characterised in that** the notch (28) is defined laterally by two tabs (34, 36) that are capable of deforming by moving apart when the tongue (30) advances into the notch (28) from the partial insertion position.

3. A device according to claim 2, **characterised in that** the outer sides (34a, 36a) of the tabs (34, 36) extend set back at least in part relative to the longitudinal edges (26c, 26d) of the strip (26).

4. A device according to any one of claims 1 to 3, **characterised in that** the width (L) of the free end (30c) of the tongue (30) is greater than the width (I) of the end wall (28c) of the notch (28).

5. A device according to any one of claims 1 to 4, **characterised in that** the sides (28a, 28b) of the notch (28) and the sides (30a, 30b) of the tongue (30) that are organised to come respectively into contact with one another are respectively mutually parallel.

6. A device according to any one of claims 1 to 5, **characterised in that** it comprises means (40, 42) for defining the position of the sealing ring (24) in the sleeve (10) such that the longitudinal ends (26a, 26b) of the ring (26) are angularly offset relative to a tightening opening (14) provided in the sleeve (10).

7. A device according to any one of claims 1 to 6, **characterised in that** the sealing ring (24) is provided with sealing beads disposed around its periphery.

## Patentansprüche

1. Vorrichtung zur dichten Kupplung zweier glatter Rohre (20, 22), die Stoß an Stoß angeordnet sind und im wesentlichen denselben Durchmesser aufweisen, wobei die Vorrichtung eine Hülse (10) umfaßt, die um die gegenüber liegenden Enden der beiden Rohre angeordnet werden kann, wobei diese Hülse mit Mitteln (14) versehen ist, um eine Verringerung ihres Durchmessers unter der Wirkung von Klemmitteln (16, 18) zu ermöglichen, wobei die Vorrichtung ferner einen Dichtungsring (24) umfaßt, der in der Hülse (10) angeordnet werden kann, um die gegenüber liegenden Enden der beiden Rohre zu umgeben, wobei dieser Ring von einem flachen Band (26) gebildet ist, das aufgerollt ist und ein erstes und ein zweites Längsende (16a, 26b) aufweist, die miteinander in Kontakt kommen können, wenn sich der Ring (24) in der Hülse (10) befindet und die Hülse um die gegenüber liegenden Enden der Rohre (20, 22) geklemmt wird, wobei das erste Längsende (26a) des Dichtungsringes eine Kerbe (28) aufweist, während das zweite Längsende (26a) des Ringes die Form einer Zunge (30) aufweist, die in diese Kerbe eingeführt werden kann,
**dadurch gekennzeichnet, daß** die Breite der Zunge (30), von einer Seite zur anderen dieser letztgenannten quer zum Band gemessen, ebenso wie die Breite der Kerbe (28), von einer Seite (28a) zur anderen (28b) dieser letztgenannten quer zum Band gemessen, beim Durchlaufen des Bandes in die Richtung (F) vom ersten Längsende (26a) zum zweiten Längsende (26b) abnehmen, daß in einer Position des teilweisen Einsetzens der Zunge (30) in die Kerbe (28) die beiden Seiten (30a, 30b) der Zunge mit den beiden Seiten (28a, 28b) der Kerbe in Kontakt kommen können, während das freie Ende (30a) der Zunge in einem Abstand zum Boden (28c) der Kerbe verbleibt, und daß aus dieser Position des teilweisen Einsetzens die Zunge unter der Wirkung des Festklemmens weiter in die Kerbe eindringen kann.

2. Vorrichtung nach Anspruch 1, **dadurch gekennzeichnet, daß** die Kerbe (28) seitlich von zwei Befestigungseisen (34, 36) begrenzt ist, die sich verformen können, wobei sie sich voneinander entfernen, wenn sich die Zunge (30) in die Kerbe (28) aus der Position des teilweisen Einsetzens vorschiebt.

3. Vorrichtung nach Anspruch 2, **dadurch gekennzeichnet, daß** sich die Außenseiten (34a, 36a) der Befestigungseisen (34, 36) mindestens teilweise in Bezug auf die Längsränder (26c, 26d) des Bandes (26) zurückgesetzt erstrecken.

4. Vorrichtung nach einem der Ansprüche 1 bis 3, **dadurch gekennzeichnet, daß** die Breite (L) des freien Endes (30c) der Zunge (30) größer als die Breite (I) des Bodens (28c) der Kerbe (28) ist.

5. Vorrichtung nach einem der Ansprüche 1 bis 4, **dadurch gekennzeichnet, daß** die Seiten (28a, 28b) der Kerbe (28) und die Seiten (30a, 30b) der Zunge (30), die jeweils dazu bestimmt sind, miteinander in Kontakt zu kommen, jeweils zueinander parallel sind.

6. Vorrichtung nach einem der Ansprüche 1 bis 5, **dadurch gekennzeichnet, daß** sie Mittel (40, 42) umfaßt, um die Position des Dichtungsringes (24) in der Hülse (10) derart zu definieren, daß die Längsenden (26a, 26b) dieses Ringes (26) winkelig in Bezug auf eine Festklemmöffnung (14), die die Hülse (10) aufweist, versetzt sind.

7. Vorrichtung nach einem der Ansprüche 1 bis 6, **dadurch gekennzeichnet, daß** der Dichtungsring (24) auf seinem Umfang angeordnete Dichtungen umfaßt.
